(19) Europäisches Patentamt / European Patent Office / Office européen des brevets

(11) **EP 0 958 675 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(21) Anmeldenummer: **98906877.0**

(22) Anmeldetag: **15.01.1998**

(51) Int Cl.:
**H04L 9/30** $^{(2006.01)}$

(86) Internationale Anmeldenummer:
**PCT/EP1998/000209**

(87) Internationale Veröffentlichungsnummer:
**WO 1998/034372 (06.08.1998 Gazette 1998/31)**

(54) **VERFAHREN ZUM VERSCHLÜSSELN EINER ALS ZAHLENWERT DARGESTELLTEN NACHRICHT**

METHOD FOR ENCRYPTING INFORMATION REPRESENTED AS A NUMERICAL VALUE

PROCEDE POUR LE CRYPTAGE D'UNE INFORMATION REPRESENTEE PAR UNE VALEUR NUMERIQUE

(84) Benannte Vertragsstaaten:
**AT BE CH DE DK ES FI FR GB GR IE IT LI LU MC NL PT SE**

(30) Priorität: **04.02.1997 DE 19703928**

(43) Veröffentlichungstag der Anmeldung:
**24.11.1999 Patentblatt 1999/47**

(73) Patentinhaber: **Deutsche Telekom AG 53113 Bonn (DE)**

(72) Erfinder:
• **SCHWENK, Jörg
D-91239 Henfenfeld (DE)**
• **HUBER, Klaus
D-64283 Darmstadt (DE)**

(56) Entgegenhaltungen:
• **VARADHARAJAN V: "Cryptosystems based on permutation polynomials" INTERNATIONAL JOURNAL OF COMPUTER MATHEMATICS, 1988, LONDON (GB), Bd. 23, Nr. 3-4, ISSN 0020-7160, Seiten 237-250, XP002067414**
• **LIDL R ET AL: "Permutation polynomials in RSA-cryptosystems" ADVANCES IN CRYPTOLOGY. PROCEEDINGS OF CRYPTO 83, SANTA BARBARA, CA, USA, 21-24 AUG. 1983, ISBN 0-306-41637-9, 1984, NEW YORK, NY, USA, PLENUM, USA, Seiten 293-301, XP002066863**
• **SCHWENK J ET AL: "PUBLIC KEY ENCRYPTION AND SIGNATURE SCHEMES BASED ON POLYNOMIALS OVER N" ADVANCES IN CRYPTOLOGY - EUROCRYPT '96 INTERNATIONAL CONFERENCE ON THE THEORY AND APPLICATION OF CRYPTOGRAPHIC TECHNIQUES, SARAGOSSA, MAY 12 - 16, 1996, 12.Mai 1996, MAURER U (ED ), Seiten 60-71, XP000577413**

EP 0 958 675 B1

**Beschreibung**

Die Erfindung betrifft ein Verfahren zum Entschlüsseln einer Nachricht c, die aus einer Nachricht m unter Benutzung eines öffentlichen Schlüssels in Form einer sehr großen verschiedene Primzahlen enthaltenden Zahl n und eines Permutationspolynoms verschlüsselt ist, wobei die verschlüsselte Nachricht aus c = P(m)mod n und der geheime Schlüssel aus dem Produkt von zumindest zwei Primzahlen gebildet ist.

Derartige Verfahren sind unter dem Namen Public-Key-Verschlüsselungsverfahren seit der Veröffentlichung der Arbeiten von Diffie und Hellmann (W. Diffie, M. E. Hellmann, "New directions in cryptography", IEEE Transactions on Information Theory, Vol. IT-22, November 1976, Seiten 644-654) sowie von Rivest, Shamir und Adleman (R. Rivest, A. Shamir und L. Adleman, "A method for obtaining digital signatures and public-key cryptosystems", Communications of the ACM, Vo. 27, Nr. 2, Februar 1978, Seiten 120-126, RSA-Verfahren) bekannt. Diese Public-Key-Verschlüsselungsverfahren verwenden im Gegensatz zu herkömmlichen Verfahren zwei Schlüssel, von denen der eine Schlüssel öffentlich und der dazu gehörende zweite Schlüssel geheim ist. Zum Verschlüsseln einer Nachricht benutzt der Absender den öffentlich zugänglichen Schlüssel des Empfängers, der alleine diese verschlüsselte Nachricht mit dem ihm bekannten geheimen Schlüssel entschlüsseln kann. Dieses Verfahren erleichtert das Schlüsselmanagement beträchtlich, da es insbesondere nicht mehr notwendig ist, den bisher zum Entschlüsseln notwendigen geheimen Schlüssel über einen sicheren Kanal dem Empfänger zu übermitteln.

Einige Anwendungsbeispiele zur Verwendung von Public-Key-Verfahren sind in der Veröffentlichung von A. Beutelspacher "Kryptologie", Vieweg-Verlag 1994 genauer beschrieben.

Aus der Literaturstelle VARADHARAJAN, V.: "Cryptosystems based on permutation polynomials" INTERNATIONAL JOURNAL OF COMPUTER MATHEMATICS, 1988, LON-DON (GB), Bd.23, Nr. 3-4 ist es bekannt, daß bei Public-Key-Verfahren Permutationspolynome verwendet werden, um Nachrichten zu verschlüsseln. Zur Entschlüsselung wird in dieser Literaturstelle vorgeschlagen, das zum Permutationspolynom inverse Polynom zu verwenden. Das bekannte Verschlüsselungsverfahren von Daten setzt also voraus, daß es zu dem Permutationspolynom der Verschlüsselung eine inverse Funktion gibt, die beim Entschlüsseln in der Praxis handhabbar ist. Das heißt, daß gemäß diesem Stand der Technik nur Permutationspolynome verwendet werden können, zu denen eine inverse Funktion existiert, die dergestalt ist, daß damit überhaupt gerechnet werden kann. Dieses bekannte Verfahren weist daher den Nachteil auf, daß nicht alle Permutationspolynome zur Verschlüsselung von Nachrichten verwendet werden können. Es sind Permutationspolynome bekannt, die relativ wenig Koeffizienten aufweisen, das zugehörige inverse Polynom jedoch eine Vielzahl von Koeffizienten umfaßt, die außerdem noch einen sehr hohen Zahlenwert besitzen können. Mit derartigen inversen Funktionen läßt sich jedoch unter vertretbarem Rechenaufwand in der Praxis nicht arbeiten.

In der Druckschrift DE 195 13 898 A1 wird ein Public-Key-Verfahren zur Verschlüsselung von Daten offenbart. Obgleich mit diesem Verfahren die Sicherheit der Ver- und Entschlüsselung gegenüber bisherigen Verfahren erhöht wird, treten bei der zur Entschlüsselung notwendigen Bestimmung von Nullstellen Mehrdeutigkeiten auf. Diese Mehrdeutigkeiten machen es notwendig, jedem zu verschlüsselnden Datenblock bekannte redundante Daten hinzuzufügen, anhand derer die richtigen entschlüsselten Daten bestimmbar sind.

Public-Key-Verschlüsselungsverfahren, die Polynome über dem Ring der Zahlen modulo einer aus mindestens zwei großen Primzahlen zusammengesetzten Zahl n verwenden, sind bereits aus der Literatur bekannt. Das RSA-Verfahren kann als solches Verfahren aufgefaßt werden. Wichtige Beispiele sind weiterhin die Verfahren, die auf sogenannten Dickson-Polynomen basieren (W.B. Müller und R. Nöbauer, "Cryptanalysis of the Dickson-Scheme", Proc. Eurocrypt 85, Lecture Notes in Computer Science, Vol. 219, 1986, S.50-61).

Die Aufgabe der vorliegenden Erfindung besteht darin, ein Verfahren zum Entschlüsseln einer chiffrierten Nachricht anzugeben, welches mit einer Vielzahl verschiedenartiger Permutationspolynome arbeiten kann, zu denen eine in der Praxis handhabbare inverse Funktion nicht zwingend vorliegen muß.

Diese Aufgabe wird durch ein Verfahren zur Entschlüsselung einer chiffrierten Nachricht gelöst, das die Merkmale des Anspruchs 1 aufweist.

Dadurch, daß durch Einsetzen der zu verschlüsselnden Nachricht m in ein Permutationspolynom P(x=m)mod n die verschlüsselte Nachricht c berechnet wird, wobei n das Produkt zweier sehr großer Primzahlen darstellt, läßt sich mittels des die zwei großen Primzahlen umfassenden geheimen Schlüssels unter Zuhilfenahme des erweiterten Euklidischen Algorithmus, den Anweisungen

$$p(x)=P(x)-c \bmod p,$$

und

$$q(x)=P(x)-c \bmod q,$$

und
der beiden Anweisungen

$$\gcd(p(x), x^p - x) \bmod p = x - a,$$

und

$$\gcd(q(x), x^q - x) \bmod q = x - b,$$

und
der Beziehung $u \cdot p + v \cdot q = 1$
die Nachricht m eindeutig berechnen gemäß

$$m = b \cdot u \cdot p + a \cdot v \cdot q \bmod n.$$

Zur Entschlüsselung der chiffrierten Nachricht c wird somit die eindeutige Nullstelle des Permutationspolynoms P(x)-c mod n berechnet.

Ein Vorteil der vorliegenden Erfindung ist insbesondere auch darin zu sehen, daß sie über die bekannten Arbeiten hinausgeht und ein Verfahren zur Ver- und Entschlüsselung schafft, das wesentlich allgemeiner ist und es gestattet, auch andere Klassen von Polynomen zu verwenden.

Die Lösung der Aufgabe ergibt sich auch aus den Merkmalen des Anspruchs 2. Dieses erfindungsgemäße Verfahren zeichnet sich dadurch aus, daß als geheimer Schlüssel die Zahl (p-1)(q-1)+1 verwendet und die eindeutige Nullstelle des Permutationspolynoms P(x)-c mod n berechnet wird, in dem die Rückgewinnung der Nachricht m durch Berechnung von $\gcd(P(x)-c, x^{(p-1)(q-1)+1} - x) \bmod n = x-m$ erfolgt. Gleichermaßen läßt sich auch eine als äquivalente Zahl bezeichnete Zahl als geheimer Schlüssel einsetzen, die sich ergibt aus:

$$\text{Konstante} \cdot \text{kgV}((p-1),(q-1))+1.$$

Als besonders vorteilhaft hat sich die Verwendung von Polynomen der Form $r \cdot x^e + s \bmod n$ und die Verwendung von Polynomen der Form

$$p(x) \cdot x^e \cdot p^{-1}(x) \bmod n$$

herausgestellt, wobei p(x) und $p^{-1}(x)$ Permutationspolynome sind, und $p^{-1}(x)$ das zu p(x) inverse Polynom ist (das heißt, $p^{-1}(p(x)) = p(p^{-1}(x)) = x \bmod n$).

Weitere vorteilhafte Weiterbildungen der Verfahren sind in den übrigen Unteransprüchen 4 bis 8 genannt.

Das Public-Key-Verfahren macht sich das schwierige mathematische Problem zu nutze, Zahlen, die das Produkt von zwei großen Primzahlen sind, zu faktorisieren, das heißt in diese beiden Primzahlen zu zerlegen. Als öffentlicher Schlüssel wird hierbei das Produkt zweier großer Primzahlen benutzt, während der geheime Schüssel aus diesen beiden Primzahlen besteht.

Das Wesentliche des erfindungsgemäßen Verfahrens ist nun darin zu sehen, daß als öffentlicher Schlüssel neben der ganzen Zahl n ein Permutationspolynom über dem Ring $Z_n$ verwendet wird. Ein Permutationspolynom über $Z_n$ ist ein Polynom mit Koeffizienten und Argumenten aus der Menge $\{0,1,...,n-1\}$, dessen Funktionswerte alle Elemente der Menge $\{0,1,...,n-1\}$ umfassen. Einen Überblick über die Theorie der Permutationspolynome bietet Lidl und Niederreiter, "Finite Fields", Encyclopaedia of Mathematics Vol. 20, Cambridge University Press 1983.

Somit umfaßt der erfindungsgemäße öffentliche Schlüssel ein Permutationspolynom P(x) und eine ganze Zahl $n = p \cdot q$, die das Produkt zweier großer Primzahlen p und q ist. Der geheime Schlüssel besteht dann aus den beiden Primzahlen p und q.

Möchte nun ein Absender eine Nachricht m an einen Empfänger übermitteln, wird der Sender den von dem Empfänger zur Verfügung gestellten öffentlichen Schlüssel heranziehen und die verschlüsselte Nachricht c wie folgt berechnen:

$$c=P(m) \mod n.$$

Sollte die als Zahlenwert vorliegende Nachricht m größer als n sein, so wird m in kleinere Blöcke aufgespalten und für jeden Teilblock jeweils die Verschlüsselung durchgeführt.

Die verschlüsselte Nachricht c wird entschlüsselt, indem der Empfänger die eindeutige Nullstelle des Polynoms P(x)-c mod n berechnet. Dies kann dadurch geschehen, daß der Empfänger der Nachricht mit Hilfe des Euklidischen Algorithmus zunächst im endlichen Körper GF(p) den größten gemeinsamen Teiler der Polynome p(x)=P(x)- c mod p und $x^p$-x bildet. Da p(x) ein Permuationspolynom über GF(p) ist, ist der größte gemeinsame Teiler ein Linearfaktor, das heißt, es gilt

$$ggT(p(x),x^P-x)=x-a.$$

Gleichermaßen wird das Verfahren auch in GF(q) durchgeführt und der größte gemeinsame Teiler der Polynome q(x)=P(x)-c mod q und $x^q$-x gebildet. Da q(x) ein Permutationspolynom über GF(q) ist, ist auch in diesem Fall der größte gemeinsame Teiler ein Linearfaktor, das heißt, es gilt

$$ggT(q(x),x^q-x)=x-b.$$

Die mit Hilfe des erweiterten Euklidischen Algorithmus berechnete Beziehung u•p+v•q=1 kann nun dazu benutzt werden, die Nachricht m aus den berechneten Werten a und b zu rekonstruieren gemäß

$$m=b\bullet u\bullet p+a\bullet v\bullet q.$$

Eine bevorzugte Implementierung dieses Verfahrens verwendet Permutationspolynome P(x), die aus einer Verschachtelung von Polynomen der Form r•$x^e$+s mod n mit ggT(e, (p-1) (q-1))=1 (verallgemeinerte RSA-Polynome), sogenannten Dickson-Polynomen, die beispielsweise in der vorgenannten Encyclopaedia of Mathematics offenbart sind, oder den sogenannten Tschebyscheffpolynomen, die in dem Aufsatz von I. Schur, "Arithmetisches über die Tschebyscheffschen Polynome", Gesammelte Abhandlungen, Band III, S.422-453, Springer-Verlag Berlin, Heidelberg, New York, offenbart sind, bestehen.

Anhand eines Beispiels mit sehr kleinen Zahlen soll das erfindungsgemäße Verfahren zur Verschlüsselung einer Nachricht m und zur Entschlüsselung der Nachricht c erläutert werden.

Im folgenden Beispiel umfaßt der geheime Schlüssel die beiden Primzahlen p=1237 und q=5683. Als öffentlicher Schlüssel ergibt sich damit n=p•q=7029871. Der öffentliche Schlüssel umfaßt darüber hinaus das Permutationspolynom P (x)=2345678$x^5$+3456789 mod n. Die zu verschlüsselnde Nachricht m soll 1234567 sein. Setzt man den Zahlenwert m in das Permutationspolynom P ein, so ergibt sich als verschlüsselte Nachricht der Wert c = P(m)=5584112.

Auf Empfängerseite werden zur Entschlüsselung der Nachricht c zunächst folgende beiden Polynome gebildet:

$$p(x)=P(x)-c \mod p=326 x^5+317,$$

und

$$q(x)=P(x)-c \mod q=4282 x^5+3802.$$

Nun werden die größten gemeinsamen Teiler dieser beiden Polynome p(x) und q(x) mit den beiden Polynomen $x^p$-x beziehungsweise $x^q$-x gebildet, wobei sich jeweils ein Linearfaktor wie folgt ergibt:

$$x-a=ggT(326x^5+317,x^{1237}-x)\,mod\,p=x+1196\,mod\,p$$

und

$$x-b=ggT(4282x^5+3802,x^{5683}-x)\,mod\,q=x+4327\,mod\,q.$$

Damit ergeben sich die Werte a=(-1196)mod 1237=41 und b=(-4327)mod 5683=1356.

Aus dem erweiterten Euklidischen Algorithmus ergeben sich aus der Beziehung u•p+v•q=1 die Werte u=2683 und v=584 (vergleiche E.R. Berlekamp, "Algebraic Coding Theory", Aegean Park Press, 1984, S. 21-24).

Die Nachricht m läßt sich nun rekonstruieren, indem man

$$-2683•p•b+584•q•a\,mod\,n=1234567$$

berechnet.

Aus dem zuvor genannten Beispiel ergibt sich, daß eine eindeutige Rekonstruktion der Nachricht m aus der verschlüsselten Nachricht c möglich ist.

Selbstverständlich ist es auch möglich, mehr als zwei Primzahlen als geheimen Schlüssel zu verwenden, wobei das erläuterte Verfahren dann analog auszuführen ist.

**Patentansprüche**

1. Verfahren zum Entschlüsseln einer chiffrierten Nachricht c, die aus einer Nachricht m unter Benutzung eines öffentlichen Schlüssels in Form einer sehr große verschiedene Primzahlen enthaltenden Zahl n und eines Permutationspolynoms P(x) verschlüsselt ist, wobei die verschlüsselte Nachricht aus c=P(m) mod n und der geheime Schlüssel aus zumindest zwei Primzahlen p, q mit n=p•q gebildet ist, derart, daß die eindeutige Nullstelle des Permutationspolynoms P(x)-c mod n berechnet, in dem

$$p(x)=P(x)-c\,mod\,p$$

und

$$q(x)=P(x)-c\,mod\,q$$

gebildet werden, aus der Bestimmung der größten gemeinsamen Teiler gemäß

$$ggT(p(x),x^p-x)\,mod\,p=x-a$$

$$ggT(q(x),x^q-x)\,mod\,q=x-b$$

die Werte a und b berechnet werden und die Nachricht m aus

$$m=b\bullet u\bullet p+a\bullet v\bullet q \bmod n$$

berechnet wird, wobei $u\bullet p + v\bullet q = 1$ ist.

2. Verfahren zum Entschlüsseln einer chiffrierten Nachricht c, die aus einer Nachricht m unter Benutzung eines öffentlichen Schlüssels in Form einer sehr große verschiedene Primzahlen enthaltenden Zahl n und eines Permutationspolynoms P(x) verschlüsselt ist, wobei die verschlüsselte Nachricht aus c=P(m) mod n gebildet ist, der geheime Schlüssel die Zahl (p-1)(q-1)+1 oder eine äquivalente Zahl ist, welche sich aus Konstante•kgV((p-1), (q-1))+1 ergibt, derart, daß die eindeutige Nullstelle des Permutationspolynoms P(x)-c mod n berechnet wird, in dem die Rückgewinnung der Nachricht m aus der chiffrierten Nachricht c durch Berechnung von

$$ggT(P(x)-c,x^{(p-1)(q-1)+1}-x) \bmod n=x-m$$

erfolgt.

3. Verfahren nach einem der vorhergehenden Ansprüche, **dadurch gekennzeichnet, daß** als Permutationspolynome Polynome der Form $r\bullet x^e+s \bmod n$ ("verallgemeinerte RSA-Polynome") verwendet werden, wobei r und s Konstanten sind und e der Exponent ist.

4. Verfahren nach einem der Ansprüche 1 und 2, **dadurch gekennzeichnet, daß** als Polynome Tschebyscheff-Polynome $T_e(x) \bmod n$ benutzt werden, und zwar in der Art, daß die als Zahlenwert dargestellte Nachricht m mit Hilfe des e-ten Tschebyscheff-Polynoms $T_e(x)$ auf die verschlüsselte Nachricht c gemäß der Anweisung $c=T_e(m) \bmod n$ abgebildet wird.

5. Verfahren nach einem der Ansprüche 1 und 2, **dadurch gekennzeichnet, daß** als Permutationspolynome Dickson-Polynome verwendet werden.

6. Verfahren nach Anspruch 1 oder 2, **dadurch gekennzeichnet, daß** als Permutationspolynome beliebige durch Kombination der Tschebyscheffschen Polynome, der Dickson-Polynome sowie der Polynome $r\bullet x^e+s$ erhaltene Polynome benutzt werden.

7. Verfahren nach Anspruch 4, **dadurch gekennzeichnet, daß** die Entschlüsselung der Nachricht m aus dem verschlüsselten Wert $c=T_e(m) \bmod n$ mit der Beziehung

$$m=T_d(c) \bmod n$$

erfolgt, wobei mit $n=p\bullet q$ die Berechnung des Werts von d mit Hilfe der Beziehung $d\bullet e\equiv 1 \bmod k$ erfolgt, in der k das kleinste gemeinsame Vielfache von $p^2-1$ und $q^2-1$ ist und e teilerfremd zu $p^2-1$ und $q^2-1$ ist.

8. Verfahren nach Anspruch 6, **dadurch gekennzeichnet, daß** die Reihenfolge der Hintereinanderausführung der Tschebyscheff, verallgemeinerte RSA- und Dickson-Transformationen, als Teil des Schlüssels gespeichert wird.

**Claims**

1. Method for decrypting an encrypted message c, said encrypted message c being encrypted from a message m using a public key in the form of a number n, containing very large different prime numbers, and a permutation polynomial P(x), the encrypted message being formed from c=P(m) mod n and the secret key being formed from at least two prime numbers p, q where n=p•q, such that the unique zero of the permutation polynomial P(x)-c mod n is calculated, wherein

$$p(x)=P(x)-c \mod p$$

and

$$q(x)=P(x)-c \mod q$$

are formed, wherein the values a and b are calculated from the determination of the largest common factors according to

$$ggT(p(x),x^p-x) \mod p=x-a$$

$$ggT(q(x),x^q-x) \mod q=x-b$$

and the message m is calculated from

$$m=b\bullet u\bullet p+a\bullet v\bullet q \mod n$$

where $u\bullet p + v\bullet q = 1$.

2. Method for decrypting an encrypted message c, said encrypted message c being encrypted from a message m using a public key in the form of a number n, containing very large different prime numbers, and a permutation polynomial P(x), the encrypted message being formed from c=P(m) mod n and the secret key being the number (p-1)(q-1)+1 or an equivalent number resulting from constant•kgV((p-1), (q-1))+1, such that the unique zero of the permutation polynomial P(x)-c mod n is calculated, wherein the message m is recovered from the encrypted message c by calculating

$$ggT(P(x)-c,x^{(p-1)(q-1)+1}-x) \mod n=x-m.$$

3. Method according to any one of the preceding claims, **characterized in that** polynomials of the form $r\bullet x^e+s \mod n$ ("generalized RSA polynomials") are used as permutation polynomials, r and s being constants and e being the exponent.

4. Method according to any one of claims 1 and 2, **characterized in that** Chebyshev polynomials $T_e(x) \mod n$ are used as polynomials, in such a manner that, using the e-th Chebyshev polynomial $T_e(x)$, the message m, represented as a numerical value, is mapped to the encrypted message c according to the statement $c=T_e(m) \mod n$.

5. Method according to any one of claims 1 and 2, **characterized in that** Dickson polynomials are used as permutation polynomials.

6. Method according to claim 1 or 2, **characterized in that** any polynomials obtained by combination of the Chebyshev polynomials, the Dickson polynomials and the polynomials $r\bullet x^e+s$ are used as permutation polynomials.

7. Method according to claim 4, **characterized in that** the decryption of the message m from the encrypted value $c=T_e(m) \mod n$ is performed using the relation

$$m=T_d(c) \mod n$$

where, with n=p•q, the value of d is calculated using the relation d•e≡1 mod k, in which k is the smallest common multiple of $p^2$-1 and $q^2$-1 and e is relatively prime to $p^2$-1 and $q^2$-1.

8.  Method according to claim 6, **characterized in that** the sequence of the consecutive execution of the Chebyshev, generalized RSA and Dickson transformations is stored as part of the key.

**Revendications**

1.  Méthode de déchiffrement d'un message chiffré c obtenu par chiffrement d'un message m en utilisant une clé publique sous la forme d'un nombre n de très grands nombres premiers différents et d'un polynôme de permutation P(x), le message chiffré étant formé par c=P(m) mod n et la clé secrète par au moins deux nombres premiers p, q où n=p•q, de manière à calculer la racine univoque du polynôme de permutation P(x)-c mod n, dans lequel sont formés

$$p(x)=P(x)-c \mod p$$

et

$$q(x)=P(x)-c \mod q,$$

à calculer les valeurs a et b à partir de la détermination des plus grands communs diviseurs selon

$$ggT(p(x), x^p-x) \mod p = x-a$$

$$ggT(q(x), x^q-x) \mod q = x-b$$

et à calculer le message m à partir de

$$m=b•u•p+a•v•q \mod n$$

où u•p + v•q = 1.

2.  Méthode de déchiffrement d'un message chiffré c, obtenu par chiffrement d'un message m en utilisant une clé publique sous la forme d'un nombre n de très grands nombres premiers différents et d'un polynôme de permutation P(x), le message chiffré étant formé par c=P(m) mod n, la clé secrète étant le nombre (p-1)(q-1)+1 ou un nombre équivalent résultant de la constante•kgV((p-1), (q-1))+1, de manière à calculer la racine univoque du polynôme de permutation P(x)-c mod n, dans lequel s'effectue la récupération du message m à partir du message chiffré c par le calcul de

$$ggT(P(x)-c, x^{(p-1)(q-1)+1}-x) \mod n = x-m.$$

3.  Méthode selon l'une quelconque des revendications précédentes, **caractérisée en ce que** l'on utilise comme polynômes de permutation des polynômes de la forme r•x$^e$+s mod n (« polynômes RSA généralisés ») où r et s sont des constantes et où e est l'exposant.

4.  Méthode selon l'une des revendications 1 et 2, **caractérisée en ce que** l'on utilise comme polynômes des polynômes de Tchebycheff $T_e(x)$ mod n de manière telle que le message m représenté en valeur numérique soit appliqué au message chiffré c à l'aide du e-ième polynôme de Tchebycheff $T_e(x)$ selon l'instruction c=$T_e$(m) mod n.

5.  Méthode selon l'une des revendications 1 et 2, **caractérisée en ce que** l'on utilise comme polynômes de permutation des polynômes de Dickson.

6.  Méthode selon l'une des revendications 1 ou 2, **caractérisée en ce que** l'on utilise comme polynômes de permutation des polynômes quelconques obtenus en combinant les polynômes de Tchebycheff, de Dickson ainsi que les polynômes r•x$^e$+s.

7.  Méthode selon la revendication 4, **caractérisée en ce que** le déchiffrement du message m s'effectue à partir de la valeur chiffrée c=$T_e$ (m) mod n avec la relation

$$m=T_d(c) \text{ mod } n,$$

où le calcul de la valeur de d s'effectue avec n=p•q, à l'aide de la relation d•e=1 mod k, k étant le plus petit commun multiple de p$^2$-1 et de q$^2$-1 et e étant premier avec p$^2$-1 et q$^2$-1.

8.  Méthode selon la revendication 6, **caractérisée en ce que** l'ordre de l'exécution successive des transformations de Tchebycheff, de RSA généralisé et de Dickson est mémorisé comme partie de la clé.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19513898 A1

**In der Beschreibung aufgeführte Nicht-Patentliteratur**

- **W. DIFFIE ; M. E. HELLMANN.** New directions in cryptography. *IEEE Transactions on Information Theory,* November 1976, vol. IT-22, 644-654
- **R. RIVEST ; A. SHAMIR ; L. ADLEMAN.** A method for obtaining digital signatures and public-key cryptosystems. *Communications of the ACM,* Februar 1978, vol. 27 (2), 120-126
- **VARADHARAJAN, V.** Cryptosystems based on permutation polynomials. *INTERNATIONAL JOURNAL OF COMPUTER MATHEMATICS,* 1988, vol. 23 (3-4
- **W.B. MÜLLER ; R. NÖBAUER.** Cryptanalysis of the Dickson-Scheme. *Proc. Eurocrypt 85, Lecture Notes in Computer Science,* 1986, vol. 219, 50-61
- über die Theorie der Permutationspolynome bietet Lidl und Niederreiter, ''Finite Fields. **EINEN ÜBERBLICK.** Encyclopaedia of Mathematics. Cambridge University Press, 1983, vol. 20
- **AUFSATZ VON I. SCHUR.** Arithmetisches über die Tschebyscheffschen Polynome. Springer-Verlag, vol. III, 422-453
- **VERGLEICHE E. ; R. BERLEKAMP.** Algebraic Coding Theory. Aegean Park Press, 1984, 21-24